# EUROPEAN PATENT APPLICATION

(11) **EP 4 040 618 A1**
(43) Date of publication of application: **10.08.2022**
(21) Application number: 21155890.3
(22) Date of filing: 09.02.2021
(51) Int. Cl.: H02G 15/18

(54) **METHOD OF INSTALLING A HEAT SHRINK COVER, ELECTRICAL HEATING SYSTEM, AND INSTALLATION SYSTEM**

(71) Applicant: Tyco Electronics Raychem GmbH, 85521 Ottobrunn (DE)
(72) Inventor: SIMONSOHN, Thilo, 85521 Ottobrunn (DE); HEINDL, Christian, 85521 Ottobrunn (DE)
(74) Representative: Grünecker Patent- und Rechtsanwälte PartG mbB

(57) **Abstract**

The present invention relates to a method of installing a heat shrink cover around a component to be covered. In particular, a method of installing a heat shrink cover around a component to be covered, by means of an electrical heating system which comprises an electrical heating unit and an electronic control unit connected to the electrical heating unit, is provided, the method comprising the following steps: attaching the electrical heating unit to an outer surface of said heat shrink cover; arranging said heat shrink cover around the component to be covered; retrieving at least one set-up parameter of the heat-shrink cover and/or the component to be covered, and generating a set-up value indicative of the at least one set-up parameter; in an energizing step, energizing said electrical heating unit to provide heat for heat-recovering said heat shrink cover, wherein the energizing step is performed in response to the set-up value.

## Description

The present invention relates to a method of installing a heat shrink cover around a component to be covered. In particular, the present invention is usable for installing medium voltage (MV) joint bodies for 12 to 42 kV, but may also be advantageous for covering other components and be used in other voltage classes. In particular, the present invention may be employed for installing heat shrink joint bodies and rejacketing sleeves as well as in principle all kinds of heat shrink sleeves such as terminations and cover sleeves as well as molded products like sheds, breakouts, boots and caps. The present invention further relates to an electrical heating system and an installation system for installing a heat shrink cover torchlessly.

The majority of existing MV joints comprise heat shrink joint bodies together with mastics, stress control sleeves, or patches underneath. On the outside of the heat shrink bodies, conductive meshes are taped or sockets get positioned, and the shield wires or tape shields of the cables are connected from one end of the joint to the other. Finally, the entire connection area is usually covered by a heat shrink outer protection sleeve, the so-called rejacketing sleeve.

Heat shrink components in the sense of the present invention relate to articles that are made from material which shrinks from an expanded state into a shrunk state with a much smaller diameter by applying a sufficient amount of heat. Heat shrink components are widely spread as joint sleeves or other cable accessories.

The present invention utilizes a heat-recoverable article (an independently dimensionally heat-unstable article) as a heat shrink layer. In general, such an article is made of a material capable of having the property of elastic or plastic memory imparted thereto which is heated to a certain temperature and distorted e. g. under internal pressure to a configuration different from its normal configuration and then cooled while kept under pressure. If the article is made of a material which is wholly or partly crystalline, is at least partly cross-linked in the amorphous areas, and is distorted at a temperature at or above the crystalline melting point of the material, the article will have elastic memory. An article with elastic memory will not recover towards its original configuration until it is again heated at least to its crystalline melting temperature. If the article is made of a non-crystalline material, it is heated to a temperature at which the article can be distorted by pressure, and the distorted article then has the property of plastic memory. Of course, the heat shrink layer can be fabricated from any suitable material, as this is known to a person skilled in the art. Moreover, also multilayer arrangements that additionally comprise elastic and/or electrically semi-conductive and conductive layers are encompassed by the present invention.

The heat shrink cover which is installed according to the present invention, is intended to be used with voltages above approximately 1 kV. In particular, the term high-voltage in the context of the present invention is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course, also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present invention may further be applied to heat shrink products used for electronic applications, piping and construction applications and further more.

The expression "sleeve" according to the present invention is intended to signify straight tube shaped sleeves as well as differently shaped covers for branch joints, elbows, bends, breakouts, wrap-arounds, sheds, and the like.

In order to install heat shrink products for LV, MV, and HV applications, typically open flames, such as gas torches, are used. However, from the stand point of safety at work, the use of open flames is disadvantageous. Furthermore, it is desired to reduce the amount of energy and the time needed for installing products. In some cases it is also desired to reduce the amount of heat generated during installation. A major aim is to reduce the impact of jointer skills on the result of heat shrink installations. An automated installation is highly desirable. Consequently, it is desirable to use other energy sources than open flames, preferably electrical energy. In particular, it is desirable that the joint body and the rejacketing sleeve can be installed torchlessly in one process without further interaction of a cable jointer.

For instance from the published European patent application EP 3 624 288 A1, a method for installing a heat shrink cover around a component to be covered is known, wherein electrical heating systems are used instead of open flames. While these known electrical heating systems have many advantages, the inventors of the present invention came to the surprising finding that the quality of the heat shrinking process and final connector arrangement strongly depend on the material underlying the various parts of the heat shrink cover. In particular, it was found that the heat conducting properties together with the temperature of the cables to be connected have a significant impact on the performance and quality of the heat shrink process.

As mentioned above, heat shrink MV joint systems have an inner joint body and an outer rejacketing sleeve. The heaters are arranged on the outside of the rejacketing sleeve and the joint body is located underneath in the center and it is shorter in length. The installation of such MV joint systems happens in trenches or manholes and seldomly in enclosed environments such as wind towers or housings. In contrast to the conditions in a laboratory environment under controlled temperature conditions, MV joint systems under real conditions are installed in the field with air temperatures between 0 °C and 45 °C. The temperatures of the cables are between -10 °C and +60 °C.

The present invention is based on the finding that the heating sequences have to differ depending on these temperatures. Furthermore, the difference are not just (linear) extensions and reductions of all parts of the time sequences, but imply more complex variations of the heating energy over time.

The object underlying the present invention is to provide an improved installation method, an electrical heating system, and an installation system for installing a heat shrink cover onto a component to be covered, which alleviate or overcome the disadvantages of conventional installation methods and provide a significant reduction of installation time, manufacturing costs and the complexity, at the same time guaranteeing a safe cover for the component to be covered, in particular by overcoming the dependency on jointer skills by implementing an automated installation. This automated installation method has to adequately deal with the impact of the substrate to be covered and its condition, especially its temperature during the installation process in order to set the correct process parameters.

This object is solved by the subject matter of the independent claims. Advantageous embodiments of the present invention are the subject matter of the dependent claims.

The present invention is based on the idea that the electrical heating sequence for shrinking a heat shrink cover has to be chosen in response to at least one of the following parameters, namely the component temperature, the material and/or the geometry of the component to be covered, the material and/or the geometry of the heat shrink cover, and the ambient temperature.

In particular, the present disclosure provides a method of installing a heat shrink cover around a component to be covered, by means of an electrical heating system which comprises an electrical heating unit and an electronic control unit connected to the electrical heating unit, the method comprising the following steps:
attaching the electrical heating unit to an outer surface of said heat shrink cover;
arranging said heat shrink cover around the component to be covered;
retrieving at least one set-up parameter of the heat-shrink cover and/or the component to be covered, and generating a set-up value indicative of the at least one set-up parameter;
in an energizing step, energizing said electrical heating unit to provide heat for heat-recovering said heat shrink cover, wherein the energizing step is performed in response to the set-up value.

By taking into account at least one set-up parameter, the effect of the component to be covered acting as a heat sink or adversely under very hot conditions as an additional heat source can be compensated and the quality of the connection as well as the necessary time for installing the cover can be optimized. Thus, reliably good electrical and sealing performances can be achieved while having short installation times.

According to a further example, retrieving a least one set-up parameter comprises measuring a temperature of the component to be covered. Under very cold conditions, the metallic parts of the component to be covered detract significant amounts of heat, so that the amount of energy delivered by the heating unit has to be increased. On the other hand, under very hot conditions (e. g. in Arabia or Australia) the time for heat shrinking the cover can be reduced significantly because the high temperature of the component to be covered assists the heating process.

According to a further advantageous example, retrieving at least one set-up parameter comprises acquiring first configuration data characterizing the component to be covered. The configuration data for instance comprise the dimensions and material of a cable connection.

In particular, the component to be covered may be a cable connection, wherein the first configuration data comprise information indicative of a cable type and cable diameter, and/or of connector type, and/or of a sealing material.

Furthermore, retrieving at least one set-up parameter may comprise acquiring second configuration data characterizing the heat shrink cover. In particular, the second configuration data may comprise information indicative of a material thickness and/or material composition of the heat shrink cover. The advantage of this solution can be seen in the fact that for each particular type of heat shrink cover an optimal heating sequence can be applied. Furthermore, also particular cases where the heat shrink cover comprises more than one part, e. g. a joint body and a rejacketing sleeve, can be taken into account.

According to an advantageous example of the present disclosure, the energizing step comprises at least one of a pre-heating stage, a main heating stage, and a post-heating stage. In particular, the energizing step may comprise at least one of a heating stage which is to heat the heat shrink cover at least partly to a temperature below the installation temperature, a main-heating stage to heat the heat shrink cover until it has at least partly shrunken down, and a post-heating stage to introduce further heat energy after the heat shrink cover has at least partly shrunken down.

It was found that pre-heating and post-heating phases (also referred to as "stages") should be added to main heating phases, which will also be referred to as "full-" heating phases. There are several advantages achieved by using these different stages.

Firstly, pre-heating can reduce the overall installation time. The joint components are made from thermally insulating material. Pre-heating allows to raise the temperature to levels of i.e. 30 °C to 70°C. These temperatures are well below the heat shrink installation temperatures of around 90 °C to 120 °C. Thus, when the full-heating takes place it can run faster than when starting from ambient or low temperatures.

Pre-heating also allows to have more reliable installations at they are starting at the same temperature no matter what the temperature of the heat shrink components were before.

An important reason for post-heating is that a heat shrink sleeves may contract to a certain extent, but not fully when not heated completely through the bulk of the material. The result would be reduced radial pressure on the component to be covered underneath (i.e. cable). This can lead to improper electrical performance or improper sealing. Applying a post-heating stage can contribute to a full heating of the sleeve through the bulk after some recovery of the sleeve, and to softening the entire heat shrink material so that it contracts fully and generates a maximum radial pressure after cooling down. The length and intensity of the post-heating depends in particular on the heat sink properties of the substrate.

In some cases, e. g. particular joint bodies, the heat shrink sleeve is multi-layered, i. e. having an inner elastomeric layer which does not need to be heated for contraction, but for good contact to the cable it is required. This is of particular importance when the cable temperature prior to installation is rather low. In other cases, heat shrink sleeves are installed over areas where mastics and other (heat-) conformable materials are applied. These require certain amounts of heat over certain times to soften and flow as required.

A fundamental reason for pre- (and post-) heating is to support creating a heat wave which runs from the center to the ends of the joint. The reason for this is that in order to achieve good electrical performance and/or to avoid entrapment of air heat shrink sleeves should be installed gradually allowing air to be driven out. To reduce the overall product cost, the number of heating elements is limited. Heating elements have widths between 50 and 150 mm in the areas where the joint body is located and up to 250 mm where the sealing on the cable jacket takes place.

Pre-heating supports a gradual contraction of the sleeve although having heaters with significant widths. In the course of intensive tests it was found that a well-defined cascading of pre-, full- and post-heating and specific time lags between energizing neighbored heating elements can significantly contribute to creating heat waves and gradual shrinking although having heater systems with the above-mentioned widths. Without this, portions of the joint body are much more likely to contract with portions with widths corresponding to the widths of the heaters on the outside. A proper electrical performance of an installed joint body is measured by achieving a distinct partial discharge (PD) level (i.e. max 5 pC at 24 kV for a 24 kV joint). It was found that such good PD results can only be achieved by generating a gradual shrinking of the joint body.

According to an advantageous example, the heating unit comprises a plurality of heating sections which can be controlled by the electronic control unit. These heating sections are also referred to as heating elements in the present context and may be formed either by integrated interconnected elements or by separate parts. The control unit advantageously controls each of the heating sections separately. Alternatively, the heating sections may also be interconnected to form groups of heating sections which are energized simultaneously. This is advantageous for performing an axially symmetric heating with respect to the center of the heat shrink cover. In particular, the heating sections can be energized through current being introduced to flow through the heating section conductors and/or which can be controlled by retrieving feedback data which are e. g. pairs of corresponding actual voltage and current values of the heating sections and/or data retrieved from separate sensor elements.

The present disclosure further relates to an electrical heating system for installing a heat shrink cover around a component to be covered, wherein the electrical heating system comprises an electrical heating unit and an electronic control unit connected to the electrical heating unit, and wherein the electrical heating system is operable to perform a method according to the present invention.

Advantageously, the electrical heating system comprises a temperature sensor for measuring a temperature of the component to be covered and/or a temperature of the air in the environment of the component to be covered and/or a temperature of the heat shrink cover. Such a temperature sensor may for instance be integrated into a probe, which is connected to the control unit via a cable or a wireless connection. By precisely determining the actual temperature of the component to be covered, heat absorption effects due to low component temperatures can be compensated. Furthermore, in case of high component temperatures, the time needed for the installation of the cover can be kept as low as possible.

According to a further example, the electrical heating system comprises input means for inputting the at least one set-up parameter of the heat-shrink cover and/or the component to be covered. For instance, input means may comprise input means for inputting an ID code of the heat shrink cover, and comprise a bar code reader, an RFID reader, a QR code reader, a wireless communication interface, and/or a manual input interface and/or a wired connection to a chip located at the heat shrink cover. The ID code may comprise the product identity and/or the product application range and/or product property values which are e. g. the resistances of the heating elements. According to an option, the heat shrink cover may have a chip integrated which can be connected to the control unit like the heaters. In this case, the control unit can then read the data on this integrated chip. No reading action of the cable jointer is required which not only saves time, but also avoids root causes for wrong input data.

Finally, the present disclosure provides an installation system comprising:
an installation kit, the installation kit having a heat shrink cover with an electrical heating unit mounted thereon, and having the electrical heating unit, and
an electronic control unit for controlling said electrical heating unit to provide heat during a heat recovery step for heat-recovering said heat shrink cover according to the method of the present invention.

The present invention may advantageously be used with a multipart heat shrink cover comprising at least one outer sleeve and at least one inner sleeve. The at least one outer sleeve and the at least one inner heat shrink sleeve may at least partly be in thermal contact before starting the installation process. This could be done by pre-heat shrinking an outer heat shrink sleeve in the factory, or by positioning a pre-stretched elastomeric sleeve on the inner heat shrink sleeve, or by wrapping films or the like. In principle, this could be done in the field and not only in the factory. Alternatively, the at least one outer sleeve and the at least one inner heat shrink sleeve initially are not in thermal contact i.e. by being separate parts which means that they can be moved freely before the heat shrink installation process.

The at least one outer sleeve preferably comprises another heat shrink sleeve, but may also be an elastomeric cold shrink sleeve, or a plastic or a metallic film/sleeve/mesh/net, etc.

Furthermore, on the outer surface of the outermost sleeve additional objects may be positioned i.e. to protect the surface i.e. from the influence of the heat source. These may be additional (thin wall, low cost) heat shrink sleeves and/or plastic or metal films/meshes or the like. The impact of the heat source may be mechanical damage of the surface (dents, slits, blisters, chemical degradation) or it may be a change of the material properties, such as the electrical properties. The application of oils or greases or the like also reduces or prevents the surface from such damages. Due to the release properties a welding effect of the heater to the heat shrink sleeve can be avoided.

The electrical heating unit on the surface of the outer sleeve may comprise a number of heating elements which are first heating the outer sleeve which after contraction touches the next inner sleeve. Then these two sleeves contract together until further sleeves on the inside are contacted. Finally, the entire assembly contracts till it conforms to the substrate underneath. The substrate underneath may be a MV cable jointing area, with at least two cable ends and at least one connector for the main conductors. In most cases, further means to connect the shields of the cables are positioned on the outside of the (non-shrunk) joint body. Preferably, these are positioned prior to the installation process which allows the installation process being a single step process installing the outer sleeve and the inner sleeve together.

In particular, two or more heating elements may be arranged on the outside of the outer sleeve which are energized at different times during the heat shrink installation process. In other words, a heating element located in the center (above an electrical connector) is energized to a high level in a first phase. Later, two further heating elements located on either side of the first heating element are energized to a high level. The term "later" is defined either by a certain time, i.e. a number of minutes, or it is defined by a certain status in the heat shrink installation process which is e.g. the outer sleeve is starting to contract, or it has contracted onto the next inner sleeve, or all sleeves including the innermost sleeve are contracting together or all sleeves have finished contracting and touched the substrate underneath.

Apart from being only controlled to be heating or not heating, the heating unit may also be controlled to perform steps such as pre-heating and post-heating with lower levels of power in addition to energizing to a high level which is sufficient to do the heat shrinking process of the sleeve(s). This speeds up the installation process and reduces the thermal stress of the components and the substrate. In particular, the electrical heating unit is controlled to heat, along a longitudinal axis of the inner and outer heat shrink sleeves, different regions of the sleeves at different instants of time during the heat recovery.

For a reliable electrical performance, in many cases a gradual shrinking process starting with the center portion of the inner sleeve, e. g. joint body, and then continuing towards the ends of the joint body and finally to the ends of the rejacketing sleeve is advantageous.

The logic of arranging multiple heating elements along the length of the outer sleeve and sequentially energizing them is continued until the end of the rejacketing sleeve. This allows to drive out air and/or avoids enclosing air especially in the electrical interfaces or in the sealing areas on the cable jacket. A comparable effect can be achieved when heater systems are overlapping which creates more heat energy in the overlap areas. So the shrinking process starts there.

In case of installing MV joints using heat shrink joint bodies and heat shrink sleeves as rejacketing sleeves, the average power density of the heater systems may be between 0.1 W/cm² and 4.0 W/cm², preferably between 0.2 W/cm² and 0.8 W/cm².

To heat-up the heater systems with up to 24 Volts to temperatures that allow for a quick and reasonably fast installation process of about 10 - 30 minutes for a standard 24 kV inline joint, copper conductors may be used as heating wires. The heating wires can be arranged on a flexible carrier material, so that the heating unit can be wrapped around the heat shrink cover and can easily be removed after the installation process has been completed.

The carrier material for the heating wires may be polyimide (PI) or polyethylene naphthalate (PEN) film with adhesive material. The thickness of the film may be in the magnitude of 10 microns but less than 80 microns. This supports wrinkling and folding with low forces when the heat shrink components contract. The heating elements may consist of two polymeric films, one or both of them covered with adhesive. The heater wires may be laid in meanders with spacing of the conductors of at least 2.5 mm to avoid delamination of the films before or during installation process.

Furthermore, in case of installing MV joints using heat shrink joint bodies and heat shrink sleeves as rejacketing sleeves, the size of the heater systems may be chosen to have at least one heater system in the center area above the connector having a width of e. g. not more than 100 mm longer than the connector, preferably be as long as the connector or up to 50% shorter. Heaters left and right of the area of the joint body should not be more than 50 mm longer on each side of the joint body end, but preferably be 20 mm longer on each side and not shorter than 5 mm on each side. The heaters at the end of the rejacketing sleeve should not be more than 60 mm longer on each side but preferably cover until the end of the rejacketing sleeve or are preferably up to 15 mm longer than it on each side.

The concept of having shorter heater systems than the length of the connector supports a reliable starting of the shrinking process in the center area over the connector. The much shorter length of the center heater(s) is also important as there are positioning tolerances of the rejacketing sleeves relative to the joint body.

If the heaters are longer by more than 20 mm on each side of the joint body, this may result in shrinking of a portion of the rejacketing sleeve beyond the end of the joint body which may lead to air entrapment. If the heaters are about as long as the joint body or shorter this may result in incomplete shrinking of the joint body. If then the next heaters are energized the rejacketing sleeve may contract relatively fast which may lead to entrapping air under the sleeve which would not lead to electrical failure of the joint, but potentially to a failure of the interfaces between cable sheath and rejacketing sleeve which seals against ingress of water or other substances.

Having heaters being longer than the rejacketing sleeve guarantees that the rejacketing sleeve shrinks completely till the ends. Due to loss of heat to the environment overhanging heater systems was found a simple means to compensate for the losses.

Although the abovementioned is referring to arrange heating systems majorly side-by-side with no or little overlap, similar effects can be achieved and comparable design parameters are valid in case of using widely overlapping heating systems.

In case of installing MV joints, the connection of the cable shields may be done after positioning of the joint body and before the positioning of the rejacketing sleeve and, of course, before the heat shrink installation takes place.

The connection of the cable shields may be done by arranging the shield wires of both cables into a common connector or, in case of tape shielded cables, an according system with so-called cheesegraters may be used. Separate elements like a rod, a number of wires, a braid and/or a number of metal stripes which are connected to each cable shield are possible as well. It is beneficial to have this element having a certain elasticity to allow for conforming to the outer shape of the installed joint body to some extent.

In this context, it is preferred that the pre-installed cable shield connections are positioned mainly on the top of the joint body. Due to gravity, the joint body has contact to the connector and the cable at the upper area. During the heat shrink process there is the least deformation and relocation in this area. This is important, as the shield connection systems may have a certain mechanical stiffness which could negatively impact the shrink process and/or cause damage or puncture to the rejacketing or to the joint body.

For ease of removing the heat transfer film and/or the heater systems after installation, it was found that covering the interface on the outer heat shrink sleeve with a substance that hinders sticking is advantageous. Beside using powders like e. g. Teflon, the application of small amounts of silicone oil or the like is useful. This release agent material should stand the heating temperatures which may be up to 200 °C and above. The release agent material may be filled with substances that improve the heat transfer like metal powders.

The method may further comprise the step of attaching a thermal insulation sleeve for at least partly covering said heating unit. Such a thermal insulation at least partly prevents heat from escaping into the environment. Thereby, firstly the efficiency of the heating is enhanced. Furthermore, heat transfer to adjacent objects is avoided which may be important from a safety aspect. Thus, the installation kit may further comprise a thermal insulation sleeve for at least partly covering said heating unit. For instance, said thermal insulation sleeve may comprise at least one pouch filled with thermally insulating particles.

The present invention further relates to an installation system comprising an installation kit and a control unit for controlling said electrical heating unit to provide heat during a heat recovery step for heat recovering said inner heat shrink sleeve. Advantageously, said control unit outputs a supply voltage, and said heating unit is provided with a plug connector for being connected with said control unit during the heat recovery step.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- FIG. 1: is a perspective view of cable connector region as an example of a component to be covered;
- FIG. 2: is a schematic representation of an example of an electrical heating unit;
- FIG. 3: is a detail of the electrical heating unit shown in Fig. 3;
- FIG. 4: is a schematic timing diagram for energizing an exemplary electrical heating unit having 12 heating sections;
- FIG. 5: illustrates a schematic of a cable joint with an inner and an outer heat shrink sleeve and an electrical heating unit before the heating takes place;
- FIG. 6: is a schematic representation of the arrangement of Fig. 5 during the heating process;
- FIG. 7: is a further schematic representation of the arrangement of Fig. 5 during the heating process;
- FIG. 8: is a perspective view of an installation system for installing a heat shrink cover.

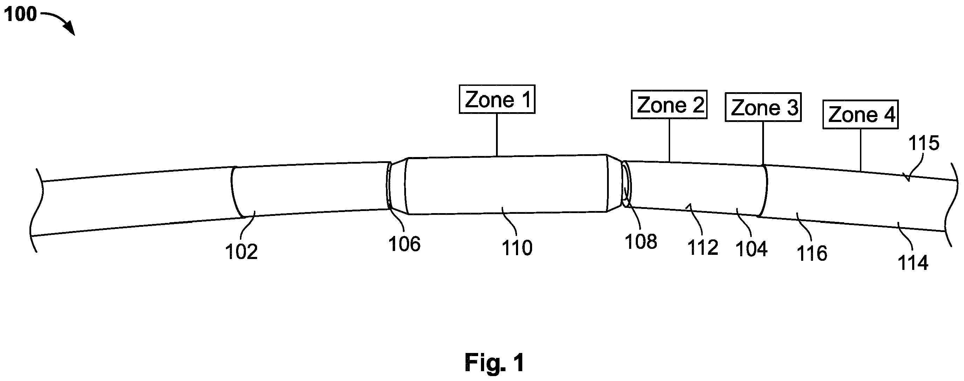

The present invention will now be explained in more detail with reference to the Figures and firstly referring to Fig. 1. The present disclosure relates to installation concepts for installing an electrically insulating cover over an object to be covered such as a medium voltage (MV) joint. Fig. 1 shows the connection between a first cable 102 and a second cable 104, this area forming a component 100 to be covered. As this is known to a person skilled in the art, the first and second cable cores 106, 108 are electrically connected by means of an electrically conductive connector 110.

As shown in Fig. 1, essentially four different zones along the longitudinal axis of the two cables have to be taken into account when mounting a heat shrink cover over this component 100 to be covered.

Zone 1 is the center zone, i. e. the area of the cable connector 110. The cable connector 110 is a metal part which is in direct thermal contact to the cable conductors 106, 108. That means that this center zone may be a significant heat sink (at low temperatures). The cable conductor cross sections differ between 25 mm² and 1000 mm². The conductor material is normally aluminum, but copper is common as well. The size of the cable connector 110 varies according to the cable conductor size. The temperature on the inside of a heat shrink product is typically 60 °C to 120 °C, depending on the wall thickness and construction of the sleeve.

If it is a sleeve only having heat shrink material the temperature on the inside is likely to be 90 °C to 120 °C during installation. If it has an elastomeric layer on the inside, the temperature may be about 60 °C. Once the inside of the heat shrink components come into contact with the connector 110, the connector 110 takes up significant amounts of heat. As mentioned above, the temperature of the cable conductors 106, 108 can be down to -10°C, even if the cable ends 102, 104 were heated up partly during the cable preparation work. The reason for this effect is that at least one of the cables was in the ground over a long period.

The cold connector taking up significant amounts of heat may require longer post-heating than other areas of the joint. The length and intensity of post-heating varies by temperature and by cable cross section and conductor material as well as the connector size and material.

Zone 2 (which is present on both sides of the connector 110, but marked only on one side in the Figure) signifies an insulation zone, i. e. the area between the center zone (Zone 1) and the end of the joint body forming the heat shrink sleeve (not shown in this Figure).

This zone is characterized by the cable conductor 106, 108 being encapsulated by an insulation material 112 which is typically polyethylene (PE). Three factors mainly influence the heat sink properties of this zone: the cable conductor cross section, the conductor material, and the thickness and material of insulation material 112. The latter depends on the voltage class (12 kV up to 42 kV). Heating sequences may be varied either according to these three factors influencing the heat sink properties and/or according to the ambient temperature during installation. In Zone 2, the joint body has to conform as best as possible to the cable insulation material 112 in order to drive out air and to close axial electrical interfaces. Further, in case of joint bodies with an elastomeric inner layer it is critical to get this layer sticking strongly to the cable insulation material 112.

These effects are mainly achieved by appropriately long post-heating phases considering the above influencing factors of the cables 102, 104.

Zone 3 refers to a screen cut zone. In the screen cut zone, mastic or other conformable materials may be applied in many applications.

Typically, at the screen cut (zone 3) conformable materials 116 ("mastics") are applied to deal with the geometrical step from the cable insulation 112 to a conductive outer layer 115. For proper electrical performance of the joint, the conformable materials 116 must be heated-up to a certain temperature through the bulk of it and it needs to be exposed to a certain (minimum) radial pressure. Influencing factors for the heating sequence are like in zone 2 and result in longer post-heating in case of low cable temperatures.

The outermost zone 4 is the sealing zone outside the joint body, where a rejacketing sleeve usually has to seal on the cable jacket 114.

The cable jacket 114 is typically a few millimeters thick and is made from polymeric material. Below the cable jacket 114 are shield wires or metallic tapes which have relatively low cross sections. The heating sequences in these areas are less dependent on ambient cable temperatures than in the area where the joint body is located. A further aspect is that the requirements in terms of installation quality are lower than those of a joint body which creates the primary insulation.

To achieve proper tightness against water ingress the often applied hotmelt on the inside of the heat shrink sleeve needs to get heated and softened as well as the outside of the cable jacket. Accordingly, post-heating heating times very much depend on the temperature measured in this region.

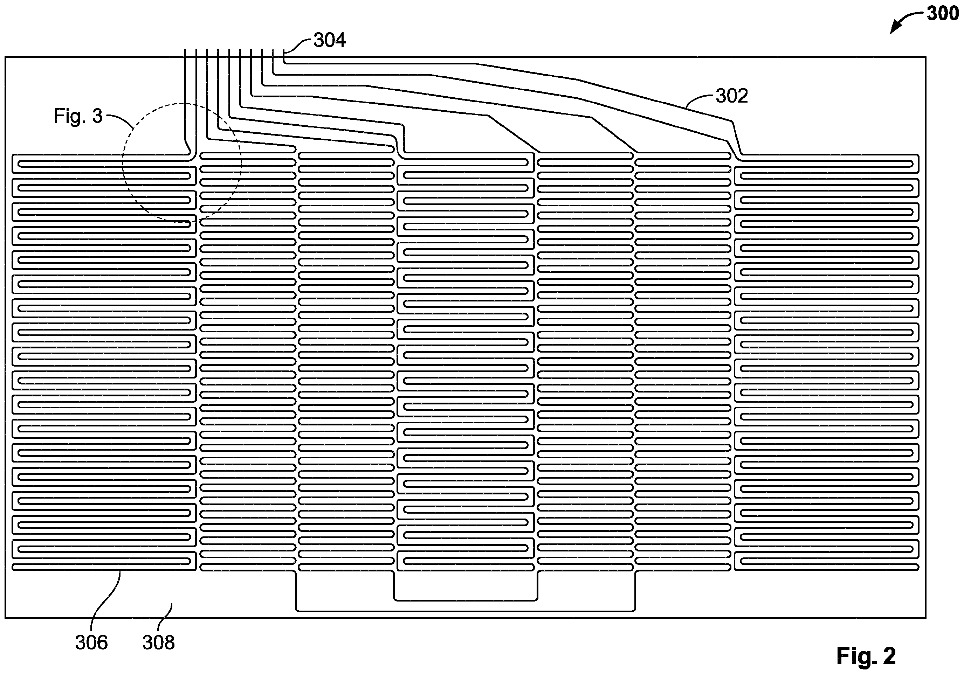

Fig. 2 shows a schematic plan view (before being formed into a cylindrical shape) of an electrical heating unit 300 comprising seven heating elements 306. The heating elements 306 are formed by wires 302.

The heating elements are arranged symmetrically with respect to a central axis which will be ring shaped when the heating unit 300 is wrapped around a heat shrink cover. As shown in Fig. 2, the central heating element and the two peripheral heating elements are structured as separate heating elements with two separate connecting elements each. In contrast thereto, the heating elements adjacent to the central heating element are connected to each other serially and the two heating elements adjacent to the peripheral heating elements are serially interconnected. Thus, the amount of connecting elements at the connector 304 can be reduced, taking into account that the inner heating elements are always operated symmetrically. Another reason for this is to generate narrow heater elements which have only half of the length of copper wire. Putting these two in series generates heaters with a typical length of wire and typical process parameters.

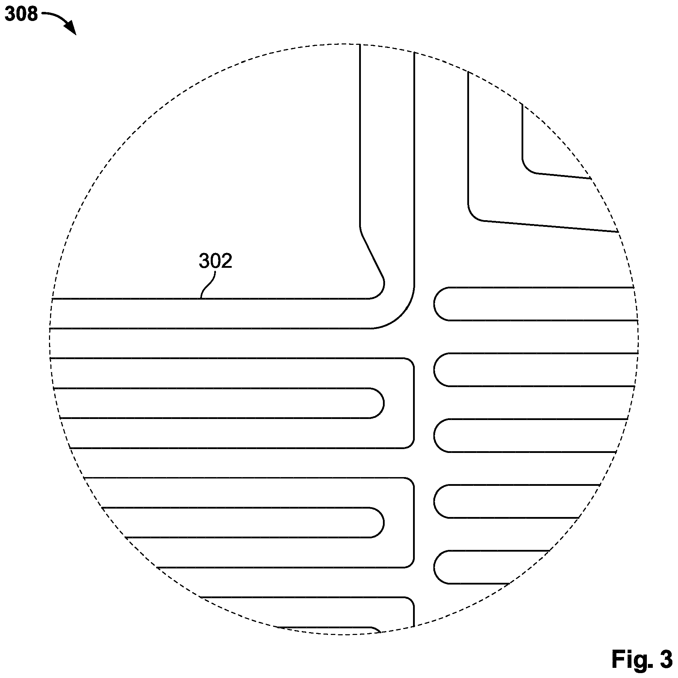

Fig. 3 is a detail of Fig. 2 illustrating the arrangement of the wires 302 on the substrate 308. In the exemplary embodiment, the wires 302 are formed by copper conductors with a diameter between 0.15 mm and 0.8 mm. the substrate 308 may for instance by formed from polyimide (PI) or polyethylene naphthalate (PEN) film with adhesive material. The thickness of the film may be in the magnitude of 10 microns but less than 80 microns. This supports wrinkling and folding with low forces when the heat shrink components contract. The heating elements may consist of two polymeric films, one or both of them covered with adhesive.

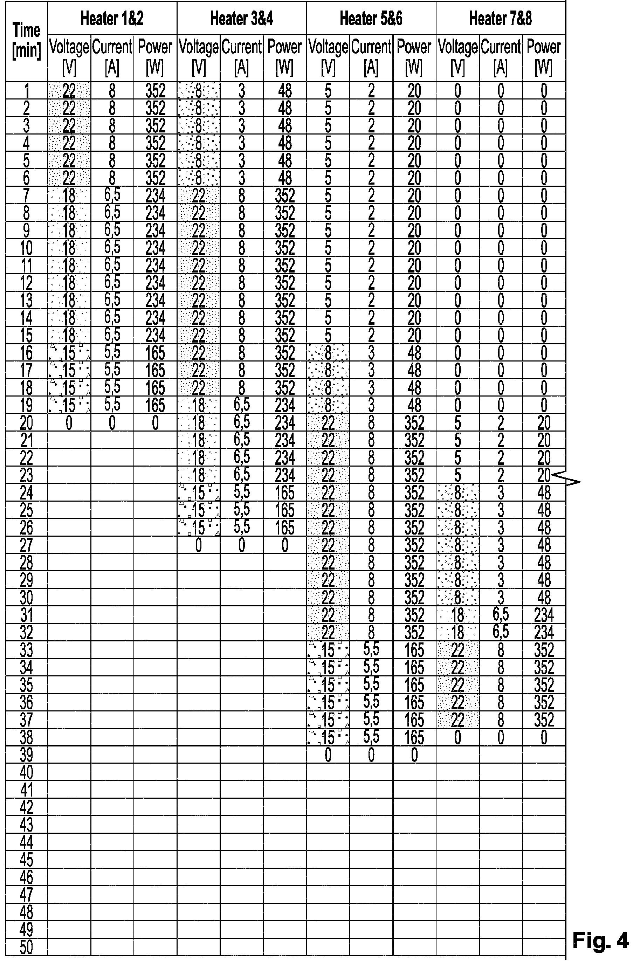

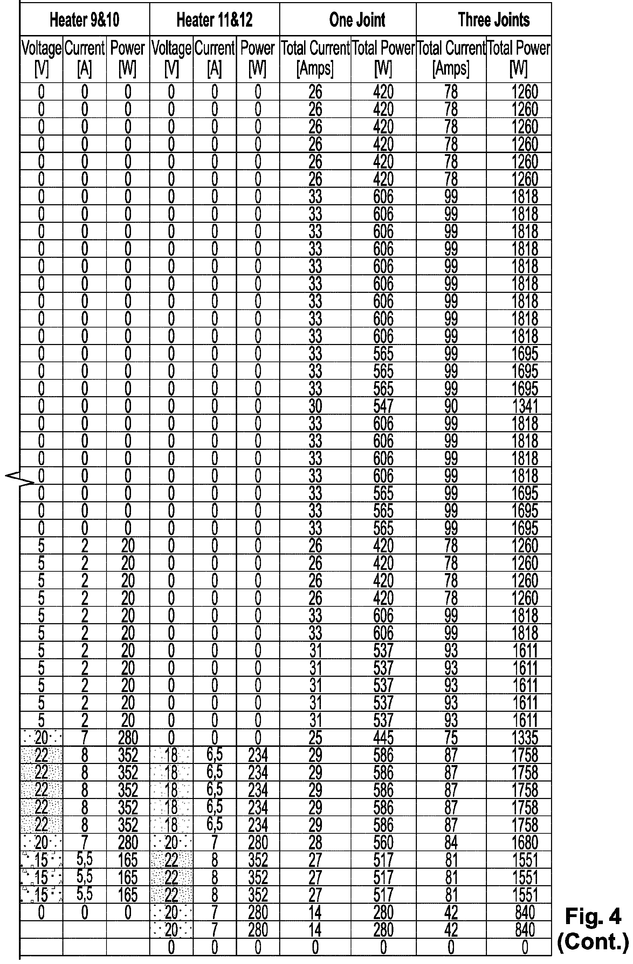

Fig. 4 illustrates an example of a timing sequence for energizing a heating unit having 12 heating elements (Heaters 1 to 12) arranged adjacent to each other in direction along the longitudinal axis of a heat shrink cover. In this arrangement, Heater 1 and Heater 2 are the heating elements arranged in the center of the heating unit, Heater 3 is left of Heater 1 and Heater 4 is right of Heater 2. Further, Heater 5 is adjacent to Heater 3 and Heater 6 is adjacent to Heater 4, and so on, until Heater 11 and Heater 12, which are the peripheral heating elements.

According to the present disclosure, the control unit choses a particular heating sequence depending on a set-up value indicative of the type of component to be covered and/or the type of heat shrink cover used. Preferably, the set-up value also contains the information about the temperature at the component to be covered. In general terms, the colder the cable and the cable accessory are the longer the postheating phases have to be chosen. The extensions depends also on the heat sink properties of the substrate (region). The duration of pre- and full-heating phases are influenced by the initial temperature of the cable accessory and their size (i.e. due to voltage class) rather than the cable temperature. Depending on the voltage class the wall thickness of the joint body is varying. It means that heating sequences for joint bodies for higher voltage classes are generally longer.

A further option is to reduce installation times by pre-heating the products prior to positioning on the cable and/or during the time before the actual installation starts.

The sequence given in Fig. 4 shows exemplary voltage values which in conjunction with the resistances of the heating elements generate sufficient heat to shrink the heat shrink cover in the areas where they are located. In this example it is 22 Volts (DC). At around the timing to switch from 22 Volts to lower values the heat shrink cover has contracted in the area of the heating element. Values of below 10 Volts generate heat which is not sufficient to bring the heat shrink cover to shrink temperatures, but raise their temperature above room temperature.

The sequence shown in Fig. 4 allows to generate a heat wave running through the heat shrink product, starting in the center and progressing to the ends. Each heating element generates not only sufficient heat to shrink the heat shrink cover in the area where it is located, but it also generates heat to raise the temperature of neighboring regions. When later the heater elements of those neighboring regions are switched to 22 Volts, the uneven initial temperature in this area is resulting in a heat shrink dynamics starting in the area close to the previous heater and then progresses to the opposite end. The width of the heater elements together with the properties of the heat shrink cover have to be chosen based on experiments and/or trials. Heater elements with a lower width allow to more easily generating a heat wave and a gradual shrinking of the heat shrink cover.

Thus, the 50 min timing sequence depicted in Fig. 4 is chosen by the control unit as optimal for components having room temperature.

As can be seen from the Figure, during the first 6 minutes Heaters 1 and 2 are energized with a maximum voltage of 22 V and a current of 8 A, that is 352 W in total for both heating elements. This is the main heating stage and no pre-heating stage is performed in this region.

Heaters 3 and 4, which are directly adjacent to Heaters 1 and 2, are energized at a lower voltage and current (8 V, 3 A, i. e. 48 W for both heating elements), thus undergoing a pre-heating stage. Still further outwardly, Heaters 5 and 6 are energized at a voltage of 5 V and the current of 2 A, leading to a total energy of 20 W. The remaining Heaters 7 to 12 are not energized during this period at all. Hence, the heat shrink cover remains cool and does not contract in these regions so that air can be pressed outwardly.

Turning back to Heaters 1 and 2, the energy provided to these two heating elements is reduced after 6 minutes and remains at 18 V, 6.5 A (that is 234 W in total) until the end of 15 minutes after the start. This is referred to as a post-heating stage. Then, the energy is reduced again for another 4 minutes and is switched off completely after 20 minutes. After this time the heat shrink cover below these two heating elements has been completely shrunk and has heated the cable section underneath to some extent in order to improve installation and conforming of the heat shrink sleeve resulting in tighter electrical interfaces.

On the other hand, Heaters 3 and 4 are heated in their main heating stage at maximum power (a voltage of 22 V and a current of 8 A, that is 352 W in total for both heating elements) starting from 7 minutes after the start until 18 minutes after the start. Then the energy is reduced (post-heating stage) and switched off after 27 minutes after the start. Heaters 7 and 8 start with their pre-heating stage where a lower amount of energy is introduced after 20 minutes after the start, and have the highest amount of energy during their main heating stage which is performed between 33 and 37 minutes after the start.

Heaters 5 and 6 start with a pre-heating stage from the very beginning and have their main heating stage (22 V, 8 A) in a period between 20 minutes and 32 minutes after the start. A post-heating stage at 15 V follows from 33 minutes to 37 minutes. Then, Heaters 5 and 6 are switched off. Heaters 5 and 6 have (together with Heaters 3 and 4) the longest main heating stage compared to the other heating elements.

Heaters 7 and 8 start their pre-heating stage at 20 minutes after the beginning of the heating sequence, in other words at the same time at which the main heating stage of the adjacent Heaters 5 and 6 starts. The energy is slowly increased and the main heating stage lasts for 5 minutes beginning with the end of the main heating stage of Heaters 5 and 6. No post-heating stage is performed by Heaters 7 and 8.

For Heaters 9 and 10, a pre-heating stage of 11 minutes starts at 27 minutes after the start of the time sequence. The main heating stage starts after 39 minutes and lasts for 5 minutes. A post-heating of 3 minutes is following.

The peripheral Heaters 11 and 12 have a rather short pre-heating of 5 minutes, starting 39 minutes after the start and have their main heating stage at the end of the total time sequence with a slight reduction in energy at the end and no significant post-heating stage. The time sequence ends at 50 minutes when the peripheral Heaters 11 and 12 are switched off.

As indicated in Fig. 4 (right hand columns) one joint can be covered at a time. Alternatively, also three joints may be covered simultaneously. Of course, the total amount of power that has to be provided is higher when shrinking three heat shrink covers at the time.

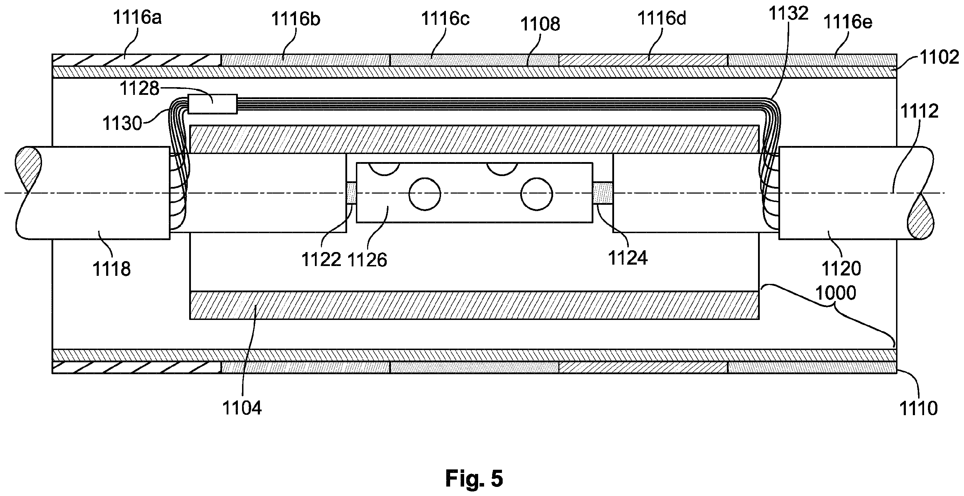

Figures 5 to 7 illustrate how the heat wave is generated from the center of the heat shrink cover to the periphery for a simpler heating unit having only five heating elements.

A cover 1000 comprises an outer sleeve 1102 and an inner sleeve 1104. The example explained in the following relates to the installation of at least two sleeves, wherein the inner sleeve is a heat shrink sleeve, by heating the outermost sleeve from its outside. A special application is the heat shrink installation of MV joints with electrical heating systems. For instance, the outer sleeve 1102 is a rejacketing sleeve and the inner sleeve 1104 is a joint body, both sleeves being separate items and being fabricated with at least one heat shrink layer. Both sleeves are being positioned independently from each other in the cable jointing area. According to the present invention, both sleeves are being installed in one installation sequence, in other words in one heating sequence, without the interaction of a jointer. At the end off the installation process, the electric heaters and all other items needed for the installation process can be removed.

As shown in Fig. 5, the cover 1000 further comprises an electrical heating unit 1110 which is arranged on the outer surface 1108 of the outer sleeve 11102. The heating unit 1110 provides all the thermal energy required to shrink the outer and the inner sleeves 1102, 1104. In the example shown in Fig. 5, both sleeves 1102, 1104 comprise at least one heat shrink layer that allows the sleeve to recover to a smaller diameter when being heated up to the recovery temperature.

Advantageously, the outer sleeve 1102 is longer than the inner sleeve 1104 in the longitudinal direction along the middle axis 1112. Thus, a reliable sealing of the connection which is covered by the first and second sleeves 1102, 1104 can be achieved. However, the first and second sleeves 1102, 1104 may of course also have the same length.

Figures 5 to 7 schematically illustrate the installation process according to the present invention. In a first step, the inner sleeve 1104 and the outer sleeve 1102 are arranged to encompass a component to be covered 1114. A heating unit 1110 is arranged on the outer surface of the outer sleeve 1102. The electric heating unit 1110 may have a plurality of heating elements 1116. These heating elements 1116 may be powered separately, so that the underlying regions may be heated differently along the longitudinal axis 1112, or connected serially to form pairs of heating elements that are energized together.

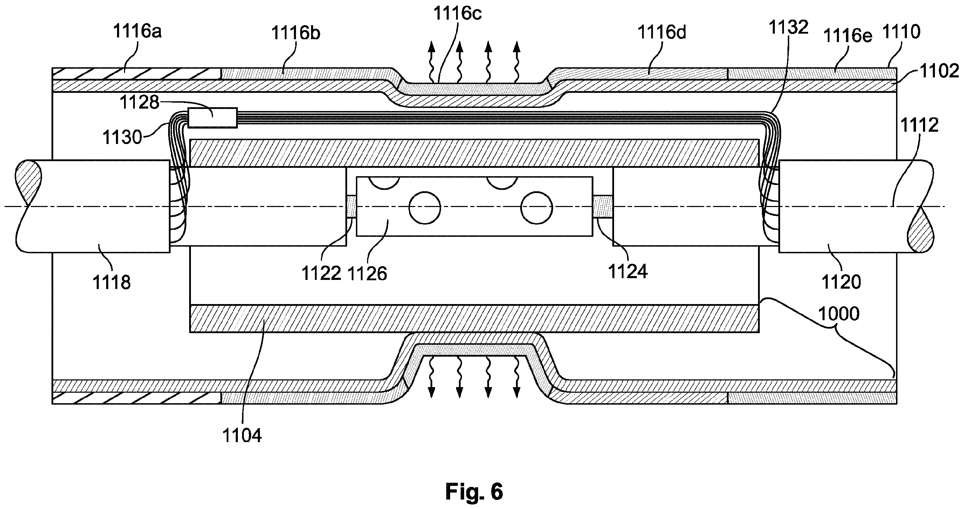

The heating unit first heats the outer sleeve 1102 in the center area determined by the size of the heating element 1116c which after heat recovery and contraction touches the outer surface of the inner sleeve 1104. This is shown in Fig. 6.

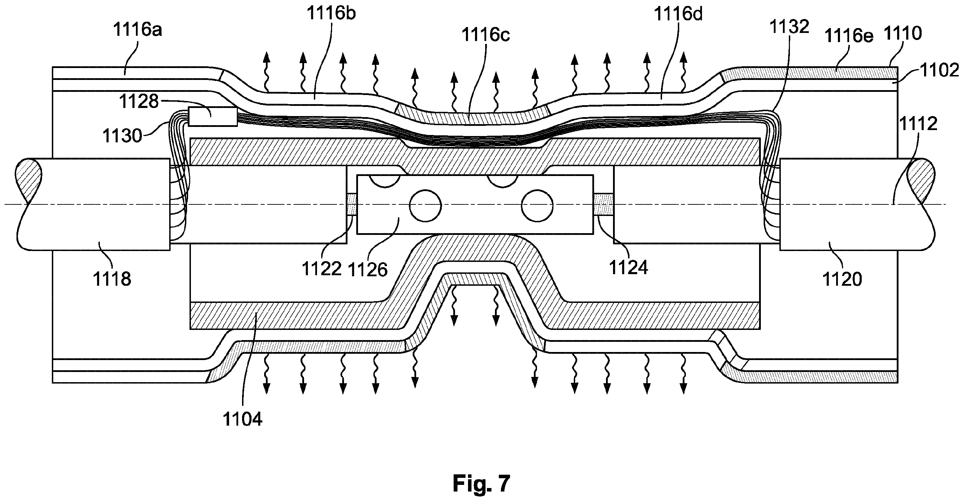

Then, the two sleeves 1102, 1104 contract together until further sleeves on the inside are contacted (not shown in the Figure). Finally, the entire assembly contracts until it conforms to the substrate 1114 underneath. The finally reached situation is shown in Fig. 7. As already mentioned, the substrate 1114 underneath may be an MV cable jointing area with at least two cable ends and at least one connector for the main conductors.

Fig. 5 to 7 illustrate the exemplary arrangement, where an MV cable jointing area is covered by a joint body forming an inner sleeve 1104 and a rejacketing sleeve forming an outer sleeve 1102. Both sleeves 1102, 1104 are heat recoverable, i. e. they comprise at least one heat shrink layer. According to this embodiment, a first cable end 1118 is connected to a second cable end 1120. A first main conductor 1122 and a second main conductor 1124 are connected to each other by means of an electrical connector 1126 as this is known to a person skilled in the art.

An electrical shield connector 1128 is provided for electrically connecting the first electrical shield wires 1130 of the first cable 1118 and the second electrical shield wires 1132 of the second cable 1120. This shield connector is attached before the rejacketing sleeve 1102 carrying the heating unit 1110 is arranged around the cable connection area. It should be noted, that the arrangement is slightly asymmetric due to the shield connection.

According to this example, the heating unit 1110 comprises five adjacent heating elements 1116a to 1116e. The heating elements 1116a to 1116e are energized at different times during the heat shrink installation process. Preferably, the heating element 1116c, which is located in the center above the connector 1126, is energized to a high level in a first phase as this is shown in Fig. 6. Thereby, the central region of the outer sleeve 1102 starts contracting towards the inner sleeve 1104. In a next phase, the heating elements 1116b and 1116d are energized exclusively or in addition to the heating element 1116c as this is shown in Fig. 7. Finally, the outermost heating elements 1116a and 1116e are energized, so that the rejacketing sleeve 1102 seals the connection completely. (This state is not shown in the figures.) At this time, the heating elements 1116c and also the heating elements 1116b and 1116d may not be energized or energized at a lower level to create a post-heating or just due to the fact that once the shrink process has started lesser amounts of energy are required to continue the heatshrink installation.

The sequence of controlling the heating elements 1116a to 1116e may either be defined by certain absolute time intervals or by certain states in the heat shrink installation process. For instance, it may be determined when the outer sleeve 1102 is starting to contract, or when it has come into contact with the next inner sleeve, or when all sleeves, including the innermost sleeve, are contracting together, or when all sleeves have finished contracting and have touched the substrate underneath. Moreover, the heating elements 1116a to 1116e may also be arranged to be overlapping or be distanced from each other, instead of being arranged adjacent to each other as this is shown in Figures 5 to 7.

Furthermore, apart from just energizing the heating elements 1116a to 1116e, i. e. switching them on or off, the heating elements 1116a to 1116e may also be controlled to heat at different power levels as was explained with reference to Fig. 4. For instance, for performing pre-heating and post-heating steps, the heating elements 1116a to 1116e may be driven with lower levels of power, in addition to energizing them to a high level which is sufficient to perform the heat shrinking process of the sleeves. Thereby, the installation process can be sped up and the thermal stress on the components and the underlying substrate is reduced. For a reliable performance, in many cases the gradual shrinking process, starting with the center portion of the joint body and then continuing towards the ends of the joint body and finally to the ends of the rejacketing sleeve, is required.

Moreover, the idea of locating multiple heating elements 1116a to 1116e along the length of the outer sleeve 1102 and sequentially energizing them is continued until the end of the rejacketing sleeve. This allows to drive out air and/or avoids enclosing air especially in the electrical interfaces or in the sealing areas of the cable jacket. A comparable effect can be achieved by using overlapping heating elements which create more energy in the overlap areas. So, the shrinking process starts in the overlapping areas.

According to the present invention, set-up values which are indicative of set-up parameters of the installation arrangement are retrieved and are used for choosing a particular heating sequence over time and along the axial direction.

In particular, the heating sequences are chosen depending on the temperature at the cable, on the particular material and geometry of the cables and the cable connector, on the particular material and geometry of the inner and outer sleeves, and/or on the ambient temperature.

One possibility to retrieve the information about these parameters is to use a control unit which can read an identification of the cover to be installed. The identification of the particular type of cover is associated with the cover's size and material. Furthermore, particular types of covers are usually only used with specific types of cables and connectors. Thus, also the material and size of the cable and connector are indirectly indicated by the ID of the cover. The specific heating sequence needed for shrinking this particular cover may for instance be stored in a table in the control unit or may be retrieved from an external data base, e. g. from the labels on the products.

Furthermore, a temperature sensor may provide the information about the temperature at the cable (and optionally also of the ambient air), so that the applied heating sequence may be chosen by additionally taking into account the measured temperature.

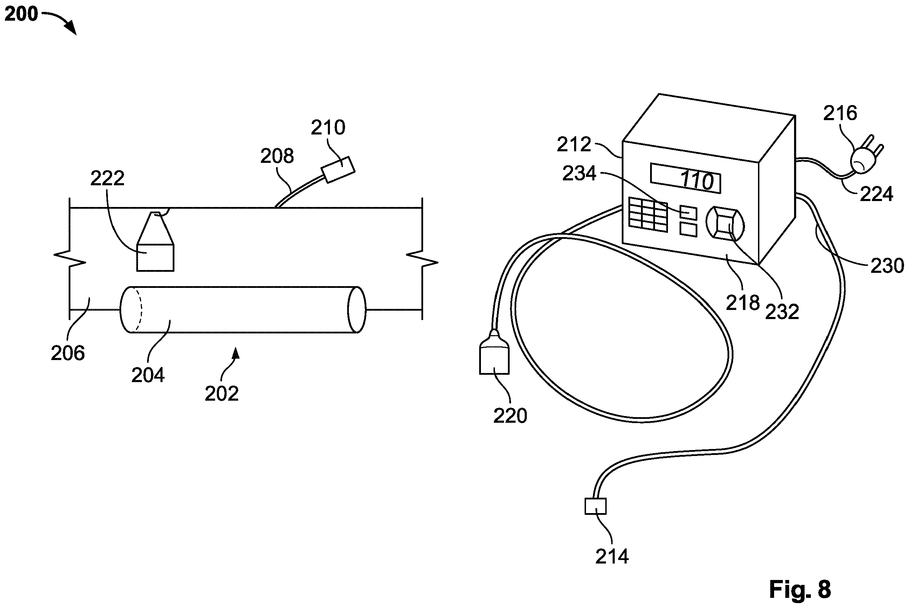

An installation system 200 for installing a heat shrink cover onto a component to be covered according to the method according to the present invention will be described in the following with reference to Figure 8. As shown in Fig. 8, an installation kit 202 comprises an inner sleeve 204 and an outer sleeve unit 206. The outer sleeve unit 206 comprises a heat shrink sleeve according to one of the embodiments described above (not visible in this Figure) covered with an electrical heating unit (not visible in this Figure), and optionally a thermally insulating unit (not visible in this Figure). The heating unit comprises at least one connector lead 208 with at least one plug connector 210.

For providing electrical energy to the heating unit, the installation system 200 comprises a control unit 212. The heating unit is connected via the plug connector 210 to a mating connector 214. The control unit 212 may be connected by means of a power supply plug 216 either to the mains power supply or to a battery or the like. A control panel 218 having keys and a display, allows manual interaction of an operator. The control unit 212 advantageously may also be used to control the intensity of the heating and, in case the heating unit is equipped with heating zones that may be addressed separately, to control the sequence of the activated heating zones. It may also detect the actual (average) temperature of the heating unit to some extent by tracking voltage and/or current. The control unit may also modify or select another set of process parameters such as voltage, current, and time periods depending on the measured or manually typed in data of the ambient temperature and/or of the heatshrink cover. The control unit may also track the actual product and process parameters as well as GPS data for the jointing location or for instance the identity of the installer or the cables.

In order to recognize the particular outer sleeve unit 206, the control unit 212 advantageously further comprises an identification reader, for instance a bar code or QR code reader 220. The outer sleeve unit 206 is equipped with a QR code tag 222 (or any other suitable identification means) for identifying the type and structure of the outer sleeve unit 206 by means of the reader 220.

Advantageously, an operator first reads the identification tag 222 of the installation kit 202. Next, the inner sleeve 204 is arranged in the desired location over the component to be covered. Then the shield connection is done. The outer sleeve unit 206 is now arranged to cover the inner sleeve 204 and the connector 210 is connected to the mating connector 214. The mating connector is providing heating energy via the low-voltage cable 230. The control unit is connected to a power source via power cable 230 and power plug 216. The operator may now input the required commands for starting the heating program that belongs to the registered identification of the identification tag 222, or uses the heating program which data may be contained in the identification tag 222 which may require to use a QR code instead of a barcode.

After completion of the heating program, the component to be covered is surrounded by a heat shrink inner sleeve 204 and a heat shrink outer sleeve (not shown in this Figure). According to the present invention, the heating unit, an optional pressing means, and an optional thermally insulating unit are removed and discarded. Advantageously, no torch is required and the details of the heating sequence are controlled by a program stored in the control unit 212 or the data is contained in the identification tag 222.

Furthermore, the identification reader 220 may also be connected to the control unit 218 in a pluggable manner, so that it may be exchanged easily. Furthermore, the installation process may of course also be controlled without using an identification means by directly communicating with the control unit 216. It goes without saying that also a wireless communication may be provided for remotely communicating with the control unit 216. Moreover, one or more communication ports, such as USB ports 234 may be provided. An emergency switch 232 may be provided for overriding the control program and switch off the heating if needed.

The present invention can be used exemplarily with arrangements where electrical heaters are positioned on the outside of an outer sleeve, such as a rejacketing sleeve. The joint body forming an inner sleeve and the rejacketing sleeve can be installed without further interaction of the cable jointer. During a first phase of the heat recovery process, the rejacketing sleeve is heated and shrunk at least in parts of its length. When the rejacketing sleeve touches the joint body below, the heat is being transferred into the joint body. After a certain time, the joint body is heated up to shrink temperature. Then both sleeves shrink together until the inner sleeve (i. e. the joint body) touches on the component to be covered. Because the heaters are positioned on the outside of the rejacketing sleeve, they can be easily removed after completion of the installation process.

Of course, beside just installing Medium Voltage joints, the present invention may be used for shrinking at least two sleeves by electrically heating the outermost sleeve from its outside in any other application environment as well. Many aspects of the present invention may be used for installing single heatshrink sleeves as well.

Finally, it has to be noted that any values or specific characteristics of the described electric and electronic components are only intended as examples and may of course be varied as necessary in order to adapt the circuitry to the particular needs of a specific application environment. Furthermore, although the embodiments have been described in relation to particular examples, the invention is not limited and numerous alterations to the disclosed embodiments can be made without departing from the scope of this invention. The various embodiments and examples are thus not intended to be limited to the particular forms disclosed. Rather, they include modifications and alternatives falling within the scope of the claims and individual features can be freely combined with each other to obtain further embodiments or examples according to the invention.

**REFERENCE NUMERALS**

| **Reference Numeral** | **Description** |
|---|---|
| 100 | Component to be covered |
| 102 | First cable |
| 104 | Second cable |
| 106 | First cable core |
| 108 | Second cable core |
| 110 | Cable connector |
| 112 | Insulation material |
| 114 | Cable jacket |
| 115 | Conductive outer layer |
| 116 | Conformable material; mastic |
| 300 | Heating unit |
| 302 | Heating wire |
| 304 | Heating wire connector |
| 306 | Heating element |
| 308 | Electrically insulating substrate |
| 1000 | Cover |
| 1102 | Outer sleeve; rejacketing sleeve |
| 1104 | Inner sleeve; joint body |
| 1108 | Outer surface of the outer sleeve |
| 1110 | Heating unit |
| 1112 | Longitudinal middle axis |
| 1114 | Component to be covered |
| 1116; 1116a-1116e | Heating element |
| 1118 | First cable end |
| 1119 | First cable jacket |
| 1120 | Second cable end |
| 1121 | Second cable jacket |
| 1122 | First main conductor |
| 1124 | Second main conductor |
| 1126 | Electrical connector |
| 1128 | Shield connector |
| 1130 | First shield wires |
| 1132 | Second shield wires |
| 200 | Installation system |
| 202 | Installation kit |
| 204 | Inner sleeve |
| 206 | Outer sleeve unit |
| 208 | Connector lead |
| 210 | Plug connector |
| 212 | Control unit |
| 214 | Mating connector |
| 216 | Power supply plug |
| 218 | Control panel |
| 220 | Code reader |
| 222 | Identification (QR code) tag |
| 226 | Power cable |
| 228 | Power connection |
| 230 | Low-voltage cable |
| 232 | Emergency switch |
| 234 | Communication port |

## Claims

1. Method of installing a heat shrink cover around a component to be covered, by means of an electrical heating system which comprises an electrical heating unit and an electronic control unit connected to the electrical heating unit, the method comprising the following steps:
attaching the electrical heating unit to an outer surface of said heat shrink cover;
arranging said heat shrink cover around the component to be covered;
retrieving at least one set-up parameter of the heat-shrink cover and/or the component to be covered, and generating at least one set-up value indicative of the at least one set-up parameter;
in an energizing step, energizing said electrical heating unit to provide heat for heat-recovering said heat shrink cover, wherein the energizing step is performed in response to the at least one set-up value.

2. Method according to claim 1, wherein retrieving at least one set-up parameter comprises measuring a temperature of the component to be covered.

3. Method according to claim 1 or 2, wherein retrieving at least one set-up parameter comprises acquiring first configuration data characterizing at least one zone of the component to be covered.

4. Method according to claim 3, wherein the component to be covered is a cable connection and wherein the first configuration data comprise information indicative of a cable type and cable diameter, and/or of connector type, and/or of a sealing material.

5. Method according to one of the preceding claims, wherein retrieving at least one set-up parameter comprises acquiring second configuration data characterizing the heat shrink cover.

6. Method according to claim 5, wherein the second configuration data comprise information indicative of a material thickness and/or material composition of the heat shrink cover.

7. Method according to one of the preceding claims, wherein the energizing step comprises comprises at least one of a heating stage which is to heat the heat shrink cover at least partly to a temperature below the installation temperature, a main-heating stage to heat the heat shrink cover until it has at least partly shrunken down, and a post-heating stage to introduce further heat energy after the heat shrink cover has at least partly shrunken down.

8. Method according to one of the preceding claims, wherein the heating unit comprises a plurality of heating sections which are operable to be energized in response to a control signal provided by the electronic control unit.

9. Electrical heating system for installing a heat shrink cover around a component to be covered, wherein the electrical heating system comprises an electrical heating unit and an electronic control unit connected to the electrical heating unit, and wherein the electrical heating system is operable to perform a method according to one of the preceding claims.

10. Electrical heating system according to claim 9, further comprising a temperature sensor for measuring a temperature of the component to be covered.

11. Electrical heating system according to claim 9 or 10, further comprising input means for inputting the at least one set-up parameter of the heat-shrink cover and/or the component to be covered.

12. Electrical heating system according to claim 11, wherein the input means comprise input means for inputting an ID code of the heat shrink cover, and comprise a bar code reader, an RFID reader, a QR code reader, a wireless communication interface, and/or a manual input interface and/or a wired connection to a chip located at the heat shrink cover.

13. Installation system comprising:
an installation kit, the installation kit having a heat shrink cover with an electrical heating unit mounted thereon, and having the electrical heating unit, and
an electronic control unit for controlling said electrical heating unit to provide heat during a heat recovery step for heat-recovering said heat shrink cover according to a method of one of the claims 1 to 8.

14. Installation system according to claim 13, further comprising a temperature sensor for measuring a temperature of the component to be covered and/or a temperature of the air in the environment of the component to be covered and/or a temperature of the heat shrink cover.

15. Installation system according to claim 13 or 14, further comprising input means for inputting an ID code of the heat shrink cover, wherein the ID code comprises a product identity and/or a product application range and/or product property values.
